**Europäisches Patentamt**

(19) **European Patent Office**

**Office européen des brevets**

(11) Veröffentlichungsnummer: **0 282 445**
**B1**

(12) **EUROPÄISCHE PATENTSCHRIFT**

(45) Veröffentlichungstag der Patentschrift:
**03.01.90**

(51) Int. Cl.⁴: **F16B 19/14**

(21) Anmeldenummer: **88810087.2**

(22) Anmeldetag: **12.02.88**

(54) **Befestigungselement mit Nagel und Hülse.**

(30) Priorität: **07.03.87 DE 3707424**

(43) Veröffentlichungstag der Anmeldung:
**14.09.88 Patentblatt 88/37**

(45) Bekanntmachung des Hinweises auf die Patenterteilung:
**03.01.90 Patentblatt 90/1**

(84) Benannte Vertragsstaaten:
**CH DE FR GB LI SE**

(56) Entgegenhaltungen:
**DE-A- 1 500 778**
**DE-A- 1 625 367**
**DE-B- 1 078 376**

(73) Patentinhaber: **HILTI Aktiengesellschaft,
FL-9494 Schaan(LI)**

(72) Erfinder: **Thurner, Elmar, Reichsstrasse 7a,
A-6800 Feldkirch(AT)**

(74) Vertreter: **Wildi, Roland, Hilti Aktiengesellschaft
Patentabteilung, FL-9494 Schaan(LI)**

## Beschreibung

Die Erfindung betrifft ein Befestigungselement mit Nagel und auf dem Schaft des Nagels geführter Hülse, wobei die Hülse einen Hals mit Aussengewinde und einen Stützflansch an dem vom Kopf des Nagels abgewandten Ende des Halses aufweist.

Zum lösbaren Befestigen von Gegenständen an einem Untergrund hat sich der Einsatz mittels Pulverkraft einzutreibender Gewindebolzen als besonders wirtschaftlich erwiesen. Die Gewindebolzen bestehen aus einem in eine Spitze auslaufenden Schaft und einem gegenüberliegend zur Spitze an den Schaft angeformten verdickten Abschnitt mit Aussengewinde. Nach dem Eintreiben des Schaftes in den Untergrund wird der mit einer Bohrung für den Durchgriff des das Aussengewinde aufweisenden Abschnittes versehende Gegenstand gegen den Untergrund gelegt und durch Aufschrauben einer Mutter auf den Abschnitt zum Untergrund hin verspannt.

Ein Problem des Befestigens mit solchen Gewindebolzen besteht darin, dass das von der Mutter aufgebrachte Anzugsmoment eine Zugkraft in den Gewindebolzen einleitet, die bei starkem Anziehen der Mutter ein Ausziehen des Gewindebolzens bewirken kann.

Diese Nachteile sind bei einem aus der GB-A 105 560 entnehmbaren Befestigungselement nicht gegeben. Das bekannte Befestigungselement besteht aus einem Nagel und aus einer mittels diesem festzulegenden Hülse. Der Nagel setzt sich aus einem Schaft und einem an diesen angeformten Kopf zusammen. Die Hülse besteht aus einem Hals mit Aussengewinde und einem angeformten Stützflansch an dem vom Kopf des Nagels abgewandten Ende des Halses. Ein zu befestigender Gegenstand wird unter Anlage am Stützflansch durch Aufschrauben einer Mutter auf das Aussengewinde der Hülse festgespannt.

Ein ausreichendes Anziehen der Mutter ist nur möglich, wenn die Hülse gegen Mitdrehen gesichert ist. Die diesbezügliche Sicherung hängt insbesondere vom Ausmass des Verspannens der Hülse zwischen dem Kopf des Nagels und dem Untergrund ab. Die Eintreibkraft des Nagels muss demnach so gewählt werden, dass einerseits ein ausreichendes Verspannen zustande kommt und andererseits der gegen die Hülse laufende Kopf keine Verformung des Aussengewindes hervorruft, da eine solche Verformung das Aufschrauben einer Mutter behindern würde. Dieses Befestigungselement ist folglich zum Setzen mittels eines pulverkraftbetriebenen Gerätes nicht geeignet, da aufgrund der wechselnden Untergrund-Verhältnisse die vorgegebene Eintreibenergie unterschiedliche Eindringtiefen des Nagels zu Folge hat.

Der Erfindung liegt die Aufgabe zugrunde, ein zum Setzen mittels Pulverkraft geeignetes Befestigungselement mit einen Kopf aufweisendem Nagel und einen Stützflansch sowie ein Aussengewinde tragender Hülse zu schaffen, das ein ausreichendes Anziehen einer Mutter ohne Beeinträchtigung der Verankerung des Nagels gewährleistet.

Erfindungsgemäss wird die Aufgabe dadurch gelöst, dass die Hülse zum Kopf des Nagels hin anschliessend an den Hals einen Rohrstutzen mit einem den Kerndurchmesser des Aussengewindes unterschreitenden Aussendurchmesser aufweist, derart, daß der Rohrstutzen beim Setzvorgang von dem auflaufenden Kopf des Nagels verformbar ist.

Der Rohrstutzen wird beim Setzvorgang von dem auflaufenden Kopf des Nagels verformt, wobei es zu einem zuverlässigen Verspannen der Hülse zwischen dem Kopf des Nagels und dem Untergrund kommt. Die durch die Pulvertreibladung vorgegebene Eintreibenergie treibt den Nagel aufgrund wechselnder Untergrund-Verhältnisse unterschiedlich tief ein, was ein variables Verformen des Rohrstutzens zur Folge hat, ohne dass dies zu einem Verformen des halsseitigen Aussengewindes führt. Ein gedämpftes Auflaufen des Kopfes am Hals kann erreicht werden, indem der Uebergang vom Kopf zum Schaft als Radius oder kegelförmig ausgebildet ist. Durch den gegenüber dem Kerndurchmesser des Aussengewindes kleineren Aussendurchmesser des Rohrstutzens wird auch erreicht, dass dieser in verformtem Zustand die Zugänglichkeit der Mutter zum Aussengewinde nicht beeinträchtigt.

Mit Vorteil unterschreitet die Wandstärke des Rohrstutzens die Restwandstärke des Halses. Diese unterschiedlichen Wandstärken können auf einfache Weise durch gleichen Innendurchmesser von Rohrstutzen und Hals erzielt werden. Der Verformungswiderstand des Rohrstutzens ist demgemäss kleiner als der Verformungswiderstand des das Aussengewinde tragenden Halses, so dass beim Setzvorgang nur der Rohrstutzen verformt wird.

Nach einem weiteren Vorschlag der Erfindung entspricht die Länge des Rohrstutzens dem Fünf- bis Zwanzigfachen dessen Wandstärke. Dadurch wird einerseits ein ausreichender Verformungsweg sichergestellt und andererseits die Bildung eines durch das Verformen entstehenden störenden Wulstes vermieden.

In Weiterbildung der Erfindung ist die Hülse im flanschseitigen Endbereich kraftschlüssig auf dem Schaft des Nagels festgelegt. Der Kraftschluss dient nicht nur dem vorteilhaften Zusammenhalt von Nagel und Hülse an sich, sondern unterstützt den drehschlüssigen Halt zwischen Hülse und Nagel, der für ausreichendes Anziehen der Mutter massgeblich ist.

Der kraftschlüssige Angriff der Hülse am Schaft des Nagels kann beim Setzvorgang durch das unter hoher Geschwindigkeit erfolgende Verschieben des Nagels in der Hülse zu ausreichender Reibungswärme führen, um eine Verlötung der in der Regel verzinkten Oberflächen des besagten flanschseitigen Endbereiches mit dem Schaft des Nagels zu bewirken. Eine so erzielbare Verlötung vermag sehr hohe Anzugsmomente der Mutter aufzunehmen. Indem der an den verlöteten Endbereich angrenzende restliche Abschnitt der Hülse mit dem Schaft des Nagels nicht kraftschlüssig verbunden ist, kann beim Anziehen der Mutter ein Uebertragen zu hoher Drehmomente an den Nagel und damit an die Verankerung als solche unterbunden werden. Beim Anziehen der Mutter wird auf den mit dem Schaft des Nagels nicht kraftschlüssig verbundenen Abschnitt der Hülse zunehmende Zugbelastung eingeleitet, die bei Ueberschreiten eines vorbestimmten Wertes zum Abtrennen dieses Abschnittes von dem mit dem Nagel verlöteten Endbereich führt. Der abgetrennte Abschnitt stützt sich dabei mit dem Rohrstutzen nach wie vor am Kopf des gesetzten Nagels axial ab, so dass die zuvor mit der Mutter erzielte Verspannung des Gegenstandes zum Untergrund hin beibehalten wird. Weiteres Drehen der Mutter führt lediglich zu einem blinden Mitdrehen des abgetrennten Abschnittes.

Die Erfindung wird nachstehend anhand einer Zeichnung, die ein Ausführungsbeispiel wiedergibt, näher erläutert. Es zeigen:

Fig. 1 ein Befestigungselement im Längsschnitt;
Fig. 2 das Befestigungselement nach Fig. 1 im Befestigungseinsatz, im Längsschnitt.

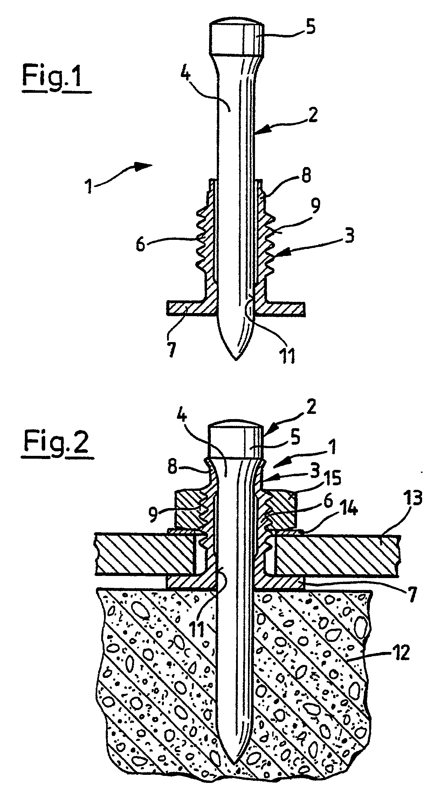

Das in Fig. 1 dargestellte, insgesamt mit 1 bezeichnete Befestigungselement besteht aus einem insgesamt mit 2 bezeichneten Nagel und einer insgesamt mit 3 bezeichneten Hülse. Der Nagel 2 verfügt über einen Schaft 4 und einen Kopf 5. Die Hülse 3 setzt sich zusammen aus einem Hals 6, einem an dessen eines Ende angeformten Stützflansch 7 und einem an dessen anderes Ende angeformten Rohrstutzen 8. Der Hals 6 verfügt über ein Aussengewinde 9. Der Aussendurchmesser des Rohrstutzens 8 ist kleiner als der Kerndurchmesser des Aussengewindes 9. Die Hülse 3 sitzt mit ihrem flanschseitigen Endbereich 11 kraftschlüssig auf dem Schaft 4.

In dem in Fig. 2 dargestellten Befestigungseinsatz ist der Nagel 2 mit dem Schaft 4 in einen Untergrund 12 eingetrieben. Der Kopf 5 ist gegen Ende des mittels Pulverkraft erfolgten Eintreibvorganges am Rohrstutzen 8 aufgelaufen und drückt so unter Verformung des Rohrstutzens 8 die Hülse 3 gegen den Untergrund 12. Nach dem Setzvorgang des Befestigungselementes 1 ist ein zu befestigender Gegenstand 13 unter Auflage am Stützflansch 7 auf den Untergrund 12 aufgelegt worden. Mittels einer Unterlegscheibe 14 und einer Mutter 15 wurde der Gegenstand 13 alsdann festgespannt. Für das Festspannen durch Drehen der Mutter 15 ist massgeblich, dass die Hülse 3 gegenüber dem Nagel 2 sich nicht verdreht. Dies wird durch das erwähnte Andrücken der Hülse 3 mittels des Kopfes 5 sichergestellt. Als Verdrehsicherung wirkt zusätzlich der kraftschlüssige Sitz des Endbereiches 11 auf dem Schaft 4, der bei entsprechender Oberflächenbeschichtung der Teile während des Eintreibvorganges des Nagels 2 zufolge Reibungswärme eine Verlötung der gegenseitig kontaktierenden Stellen dieser Teile hervorrufen kann.

**Patentansprüche**

1. Befestigungselement (1) mit Nagel (2) und auf dem Schaft (4) des Nagels (2) geführter Hülse (3), wobei die Hülse (3) einen Hals (6) mit Aussengewinde (9) und einen Stützflansch (7) an dem vom Kopf (5) des Nagels (2) abgewandten Ende des Halses (6) aufweist, **dadurch gekennzeichnet**, dass die Hülse (3) zum Kopf (5) des Nagels (2) hin anschliessend an den Hals (6) einen Rohrstutzen (8) mit einem den Kerndurchmesser des Aussengewindes (9) unterschreitenden Aussendurchmesser aufweist, derart, daß der Rohrstutzen beim Setzvorgang von dem auflaufenden Kopf des Nagels verformbar ist.

2. Befestigungselement nach Anspruch 1, dadurch gekennzeichnet, dass die Wandstärke des Rohrstutzens (8) die Restwandstärke des Halses (6) unterschreitet.

3. Befestigungselement nach Anspruch 1 oder 2, dadurch gekennzeichnet, dass die Länge des Rohrstutzens (8) dem Fünf- bis Zwanzigfachen dessen Wandstärke entspricht.

4. Befestigungselement nach einem der Ansprüche 1 bis 3, dadurch gekennzeichnet, dass die Hülse (3) im flanschseitigen Endbereich (11) kraftschlüssig auf dem Schaft (4) des Nagels (2) festgelegt ist.

Claims

1. A fastening element (1) having a nail (2) and a sleeve (3) which is guided on the shank (4) of the nail (2), in which respect the sleeve (3) has a neck (6) having an external thread (9) and a supporting flange (7) at that end of the neck (6) which is remote from the head (5) of the nail (2), characterised in that the sleeve (3) has towards the head (5) of the nail (2) linking on to the neck (6) a socket (8) having an outside diameter which falls below the core diameter of the external thread (9), in such a way that the socket upon the setting procedure is deformable by the running-up head of the nail.

2. A fastening element according to claim 1, characterised in that the wall thickness of the socket (8) falls below the residual wall thickness of the neck (6).

3. A fastening element according to claim 1 or 2, characterised in that the length of the socket (?) (8) corresponds to five up to twenty times the wall thickness thereof.

4. A fastening element according to one of claims 1 to 3, characterised in that the sleeve (3) is secured in the flange-sided end region (11) in a force-locking manner on the shank (4) of the nail (2).

**Revendications**

1. Elément de fixation (1) avec clou (2) et douille (3) guidée sur la tige (4) du clou (2), la douille (3) présentant un col (6) avec filet extérieur (9) ainsi qu'une bride d'appui (7) à l'extrémité du col (6) opposée à la tête (5) du clou (2), caractérisé en ce que la douille (3) présente, en direction de la tête (5) du clou (2) et contiguë au col (6), une tubulure (8) dont le diamètre extérieur est inférieur au diamètre du noyau du filet extérieur (9) de sorte que ladite tubulure peut être déformée par la tête du clou lors de l'opération de pose.

2. Elément de fixation selon la revendication 1, caractérisé en ce que l'épaisseur de paroi de la tubulure (8) est inférieure à l'épaisseur du reste de la paroi du col (6).

3. Elément de fixation selon la revendication 1 ou 2, caractérisé en ce que la longueur de la tubulure (8) correspond à cinq à vingt fois son épaisseur de paroi.

4. Elément de fixation selon l'une des revendications 1 à 3, caractérisé en ce que la section terminale (11) de la douille (3) du côté bride est bloquée par adhérence sur la tige (4) du clou (2).

Fig.1

Fig.2